# EUROPEAN PATENT APPLICATION

(11) **EP 3 691 304 A1**
(43) Date of publication of application: **05.08.2020**
(21) Application number: 17927253.9
(22) Date of filing: 29.09.2017
(51) Int. Cl.: H04W 4/12

(54) **WIRELESS COMMUNICATION METHOD AND DEVICE**

(71) Applicant: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Ziebig & Hengelhaupt Patent- und Rechtsanwaltskanzlei PartG mbB
(86) International application number: PCT/CN2017/104570
(87) International publication number: WO 2019/061347

(57) **Abstract**

Provided in embodiments of the present application are a wireless communication method and a device, which can improve communication performance in terms of configuration or use of resources. The method comprises: a first device receives first information from a second device, wherein the first information comprises time domain resource information of a first channel; and on the basis of the first information, the first device determines a time domain resource location and/or size of the first channel, and a time domain resource location and/or size of the second channel.

## Description

### TECHNICAL FIELD

The present disclosure relates to the field of communication, and more particularly to a method and a device for wireless communication.

### BACKGROUND

In the Long Term Evolution (LTE) system, a network side may configure a common search space and a user-specific search space for a terminal, the terminal may search for a channel, such as a Physical Downlink Control Channel (PDCCH), a Physical Uplink Shared Channel (PUSCH), a Physical Uplink Control Channel (PUCCH) or a Physical Downlink Shared Channel (PDSCH), sent by the network side in the common search space and the user-specific search space, and a network device may perform resource scheduling on the terminal to implement data transmission with the terminal device.

In the 5th-Generation (5G) system, a requirement for communication performance is high, and communication resources may be configured and used more flexibly.

Therefore, how to improve communication performance for resource configuration or usage is a problem urgent to be solved.

### SUMMARY

A method and device for wireless communication are provided according to the embodiments of the present disclosure, to improve communication performance for resource configuration or usage.

In a first aspect, a method for wireless communication is provided, which includes the following operations.

A first device receives first information from a second device. The first information includes time-domain resource information of a first channel.

The first device determines a time-domain resource position and/or a time-domain resource size of the first channel and a time-domain resource position and/or a time-domain resource size of a second channel according to the first information.

Therefore, in the embodiments of the present disclosure, not only the time-domain resource position and/or the a time-domain resource size of the first channel but also the time-domain resource position and/or the time-domain resource size of the second channel are determined based on the time-domain resource information of the first channel, thereby solving the problem of high signaling overhead caused by sending of the time-domain resource information of the first channel and time-domain resource information of the second channel to the second device by the first device, improving flexibility in resource configuration and usage, and associating transmission of the first channel with transmission of the second channel.

In combination with the first aspect, in a possible implementation of the first aspect, the first channel and the second channel may be different in at least one of: being located in different bandwidth portions, being located on different carriers, being located in different cells, adopting different duplex directions or adopting different numerologies.

In combination with the first aspect or any abovementioned possible implementation, in another possible implementation of the first aspect, the first channel and the second channel being different in adopting different numerologies may include subcarrier spacings and/or cyclic prefixes being different.

In combination with the first aspect or any abovementioned possible implementation, in another possible implementation of the first aspect, the operation that the first device determines the time-domain resource position and/or the time-domain resource size of the first channel and the time-domain resource position and/or the time-domain resource size of the second channel according to the first information may include the following operations.

The first device determines the time-domain resource position and/or the time-domain resource size of the first channel according to the first information.

The first device determines the time-domain resource position and/or the time-domain resource size of the second channel according to the time-domain resource position and/or the time-domain resource size of the first channel.

In combination with the first aspect or any abovementioned possible implementation, in another possible implementation of the first aspect, the operation that the first device determines the time-domain resource position and/or the time-domain resource size of the second channel according to the time-domain resource position and/or the time-domain resource size of the first channel may include the following operation.

The time-domain resource position of the second channel is determined according to the time-domain resource position of the first channel and a position relationship between the time-domain resource position of the first channel and the time-domain resource position of the second channel.

In combination with the first aspect or any abovementioned possible implementation, in another possible implementation of the first aspect, the position relationship may indicate that:
the time-domain resource position of the first channel is identical to the time-domain resource position of the second channel;
the time-domain resource position of the first channel is ahead of the time-domain resource position of the second channel; or,
the time-domain resource position of the first channel is behind the time-domain resource position of the second channel.

In combination with the first aspect or any abovementioned possible implementation, in another possible implementation of the first aspect, the position relationship may be preset in the first device.

In combination with the first aspect or any abovementioned possible implementation, in another possible implementation of the first aspect, the method may further include the following operation.

The first device receives second information from the second device. The second information is used to indicate the position relationship.

In combination with the first aspect or any abovementioned possible implementation, in another possible implementation of the first aspect, the second information may be carried in Radio Resource Control (RRC) signaling, control information, system information or a Media Access Control Control Element (MAC CE).

In combination with the first aspect or any abovementioned possible implementation, in another possible implementation of the first aspect, the first information may be used to indicate a relative time-domain position of the first channel relative to a third channel.

The operation that the first device determines the time-domain resource position and/or the time-domain resource size of the first channel according to the first information may include the following operation.

The time-domain resource position of the first channel is determined according to a time-domain resource position of the third channel and the relative time-domain position.

In combination with the first aspect or any abovementioned possible implementation, in another possible implementation of the first aspect, the third channel may be a control channel.

In combination with the first aspect or any abovementioned possible implementation, in another possible implementation of the first aspect, the first information may be carried in control information in the control channel, system information, RRC signaling or an MAC CE.

In combination with the first aspect or any abovementioned possible implementation, in another possible implementation of the first aspect, the first channel may be a data channel, and the second channel may be a data channel.

In combination with the first aspect or any abovementioned possible implementation, in another possible implementation of the first aspect, the first device may be a terminal device, and the second device may be a network device.

In combination with the first aspect or any abovementioned possible implementation, in another possible implementation of the first aspect, the first channel may be a channel between the first device and the second device, and the second channel may be a channel between the first channel and the second device.

In combination with the first aspect or any abovementioned possible implementation, in another possible implementation of the first aspect, the time-domain resource position may include a time-domain resource starting position and/or a time-domain resource ending position.

In a second aspect, a method for wireless communication is provided, which may include the following operations.

A second device determines time-domain resource information of a first channel.

The second device sends first information to a first device. The first information includes the time-domain resource information of the first channel and used by the first device to determine a time-domain resource position and/or a time-domain resource size of the first channel and a time-domain resource position and/or a time-domain resource size of a second channel.

Therefore, in the embodiments of the present disclosure, not only the time-domain resource position and/or the time-domain resource size of the first channel but also the time-domain resource position and/or he time-domain resource size of the second channel are determined based on the time-domain resource information of the first channel, thereby solving the problem of high signaling overhead caused by sending of the time-domain resource information of the first channel and time-domain resource information of the second channel to the second device by the first device, improving flexibility in resource configuration and usage, and associating transmission of the first channel with transmission of the second channel.

In combination with the second aspect, in a possible implementation of the second aspect, the first channel and the second channel may be different in at least one of: being located in different bandwidth portions, being located on different carriers, being located in different cells, adopting different duplex directions or adopting different numerologies.

In combination with the second aspect or any abovementioned possible implementation, in another possible implementation of the second aspect, the first channel and the second channel being different in adopting different numerologies may include subcarrier spacings and/or cyclic prefixes being different.

In combination with the second aspect or any abovementioned possible implementation, in another possible implementation of the second aspect, the method may further include the following operation.

The second device sends second information to the first device. The second information is used to indicate a position relationship between the time-domain resource position of the first channel and the time-domain resource position of the second channel.

In combination with the second aspect or any abovementioned possible implementation, in another possible implementation of the second aspect, the position relationship may indicate that:
the time-domain resource position of the first channel is identical to the time-domain resource position of the second channel;
the time-domain resource position of the first channel is ahead of the time-domain resource position of the second channel; or,
the time-domain resource position of the first channel is behind the time-domain resource position of the second channel.

In combination with the second aspect or any abovementioned possible implementation, in another possible implementation of the second aspect, the second information may be information carried in RRC signaling, control information, system information or an MAC CE.

In combination with the second aspect or any abovementioned possible implementation, in another possible implementation of the second aspect, the first information may be used to indicate a relative time-domain position of the first channel relative to a third channel.

In combination with the second aspect or any abovementioned possible implementation, in another possible implementation of the second aspect, the third channel may be a control channel.

In combination with the second aspect or any abovementioned possible implementation, in another possible implementation of the second aspect, the first information may be carried in control information in the control channel, system information, RRC signaling or an MAC CE.

In combination with the second aspect or any abovementioned possible implementation, in another possible implementation of the second aspect, the first channel may be a data channel, and the second channel may be a data channel.

In combination with the second aspect or any abovementioned possible implementation, in another possible implementation of the second aspect, the first device may be a terminal device, and the second device may be a network device.

In combination with the second aspect or any abovementioned possible implementation, in another possible implementation of the second aspect, the first channel may be a channel between the first device and the second device, and the second channel may be a channel between the first channel and the second device.

In combination with the second aspect or any abovementioned possible implementation, in another possible implementation of the second aspect, the time-domain resource position may include a time-domain resource starting position and/or a time-domain resource ending position.

In a third aspect, a method for wireless communication is provided, which may include the following operations.

A first device receives first information from a second device. The first information includes frequency-domain resource information of a first channel.

The first device determines the frequency-domain resource information of the first channel and frequency-domain resource information of a second channel according to the first information.

Therefore, in the embodiments of the present disclosure, the frequency-domain resource information of the second channel is determined according to the frequency-domain resource information, indicated by the first device, of the first channel, thereby solving the problem of high signaling overhead caused by sending of the frequency-domain resource information of the first channel and the frequency-domain resource information of the second channel to the second device by the first device, improving flexibility in resource configuration and usage, and associating transmission of the first channel with transmission of the second channel.

In combination with the third aspect, in a possible implementation of the third aspect, the first channel and the second channel may be different in at least one of:
being located in different bandwidth portions, being located on different carriers, being located in different cells, adopting different duplex directions or adopting different numerologies.

In combination with the third aspect or any abovementioned possible implementation, in another possible implementation of the third aspect, the first channel and the second channel being different in adopting different numerologies may include subcarrier spacings and/or cyclic prefixes being different.

In combination with the third aspect or any abovementioned possible implementation, in another possible implementation of the third aspect, the first information may be used to indicate a frequency-domain resource position and/or a frequency-domain resource size of the first channel.

The operation that the first device determines the frequency-domain resource information of the first channel and the frequency-domain resource information of the second channel according to the first information may include the following operations.

The first device determines the frequency-domain resource position and/or the frequency-domain resource size of the first channel according to the first information.

The first device determines a frequency-domain resource position and/or the frequency-domain resource size of the second channel according to the frequency-domain resource position and/or the frequency-domain resource size of the first channel.

In combination with the third aspect or any abovementioned possible implementation, in another possible implementation of the third aspect, the operation that the first device determines the frequency-domain resource position and/or the frequency-domain resource size of the second channel according to the frequency-domain resource position and/or the frequency-domain resource size of the first channel may include the following operation.

The frequency-domain resource position of the second channel is determined according to the frequency-domain resource position of the first channel and a position relationship between the frequency-domain resource position of the first channel and the frequency-domain resource position of the second channel.

In combination with the third aspect or any abovementioned possible implementation, in another possible implementation of the third aspect, the position relationship may indicate that:
a relative frequency-domain position of the first channel in the carrier or the bandwidth portion where the first channel is located is identical to a relative frequency-domain position of the second channel in the carrier or the bandwidth portion where the second channel is located.

In combination with the third aspect or any abovementioned possible implementation, in another possible implementation of the third aspect, the position relationship may be preset in the first device.

In combination with the third aspect or any abovementioned possible implementation, in another possible implementation of the third aspect, the method may further include the following operation.

The first device receives second information from the second device. The second information is used to indicate the position relationship.

In combination with the third aspect or any abovementioned possible implementation, in another possible implementation of the third aspect, the second information may be carried in RRC signaling, control information, system information or an MAC CE.

In combination with the third aspect or any abovementioned possible implementation, in another possible implementation of the third aspect, the operation that the first device determines the frequency-domain resource position and/or the frequency-domain resource size of the second channel according to the frequency-domain resource position and/or the frequency-domain resource size of the first channel may include the following operation.

The frequency-domain resource size of the second channel is determined according to the frequency-domain resource size of the first channel and a size relationship between the frequency-domain resource size of the first channel and the frequency-domain resource size of the second channel.

In combination with the third aspect or any abovementioned possible implementation, in another possible implementation of the third aspect, the size relationship may indicate that:
the frequency-domain resource size of the first channel is identical to the frequency-domain resource size of the second channel; or
the frequency-domain resource size of the first channel is N times or 1/N times the frequency-domain resource size of the second channel, N being an integer greater than 1.

In combination with the third aspect or any abovementioned possible implementation, in another possible implementation of the third aspect, the size relationship may be preset in the first device.

In combination with the third aspect or any abovementioned possible implementation, in another possible implementation of the third aspect, the method may further include the following operation.

The first device receives third information from the second device. The third information is used to indicate the size relationship.

In combination with the third aspect or any abovementioned possible implementation, in another possible implementation of the third aspect, the third information may be carried in the RRC signaling, the control information, the system information or the MAC CE.

In combination with the third aspect or any abovementioned possible implementation, in another possible implementation of the third aspect, the first information may be carried in the RRC signaling, the system information, the control information or the MAC CE.

In combination with the third aspect or any abovementioned possible implementation, in another possible implementation of the third aspect, the first device may be a terminal device, and the second device may be a network device.

In combination with the third aspect or any abovementioned possible implementation, in another possible implementation of the third aspect, the first channel may be a channel between the first device and the second device, and the second channel may be a channel between the first channel and the second device.

In a fourth aspect, a method for wireless communication is provided, which may include the following operations.

A second device determines frequency-domain resource information of a first channel.

The second device sends first information to a first device. The first information includes the frequency-domain resource information of the first channel and is used by the first device to determine the frequency-domain resource information of the first channel and frequency-domain resource information of a second channel.

Therefore, in the embodiments of the present disclosure, the frequency-domain resource information of the second channel is determined according to the frequency-domain resource information, indicated by the first device, of the first channel, thereby solving the problem of high signaling overhead caused by sending of the frequency-domain resource information of the first channel and the frequency-domain resource information of the second channel to the second device by the first device, improving flexibility in resource configuration and usage, and associating transmission of the first channel with transmission of the second channel.

In combination with the fourth aspect, in a possible implementation of the fourth aspect, the first channel and the second channel may be different in at least one of:
being located in different bandwidth portions, being located on different carriers, being located in different cells, adopting different duplex directions or adopting different numerologies.

In combination with the fourth aspect or any abovementioned possible implementation, in another possible implementation mode of the fourth aspect, the first channel and the second channel being different in adopting different numerologies may include subcarrier spacings and/or cyclic prefixes being different.

In combination with the fourth aspect or any abovementioned possible implementation, in another possible implementation of the fourth aspect, the method may further include the following operation.

The second device sends second information to the first device. The second information is used to indicate a position relationship between a frequency-domain resource position of the first channel and a frequency-domain resource position of the second channel.

In combination with the fourth aspect or any abovementioned possible implementation, in another possible implementation of the fourth aspect, the position relationship may indicate that:
a relative frequency-domain position of the first channel in the carrier or the bandwidth portion where the first channel is located is identical to a relative frequency-domain position of the second channel in the carrier or the bandwidth portion where the second channel is located.

In combination with the fourth aspect or any abovementioned possible implementation, in another possible implementation of the fourth aspect, the second information may be carried in RRC signaling, control information, system information or an MAC CE.

In combination with the fourth aspect or any abovementioned possible implementation, in another possible implementation of the fourth aspect, the method may further include the following operation.

The second device sends third information to the first device. The third information is used to indicate a size relationship between a frequency-domain resource size of the first channel and a frequency-domain resource size of the second channel.

In combination with the fourth aspect or any abovementioned possible implementation, in another possible implementation of the fourth aspect, the size relationship may indicate that:
the frequency-domain resource size of the first channel is identical to the frequency-domain resource size of the second channel; or
the frequency-domain resource size of the first channel is N times or 1/N times the frequency-domain resource size of the second channel, N being an integer greater than 1.

In combination with the fourth aspect or any abovementioned possible implementation, in another possible implementation of the fourth aspect, the third information may be information carried in the RRC signaling, control information, system information or an MAC CE.

In combination with the fourth aspect or any abovementioned possible implementation, in another possible implementation of the fourth aspect, the first information may be carried in the RRC signaling, the system information, the control information or the MAC CE.

In combination with the fourth aspect or any abovementioned possible implementation, in another possible implementation of the fourth aspect, the first device may be a terminal device, and the second device may be a network device.

In combination with the fourth aspect or any abovementioned possible implementation, in another possible implementation of the fourth aspect, the first channel may be a channel between the first device and the second device, and the second channel may be a channel between the first channel and the second device.

In a fifth aspect, a device for wireless communication is provided, which is configured to execute the method in the first aspect or any possible implementation of the first aspect or the second aspect or any possible implementation of the second aspect. Specifically, the device for wireless communication includes functional modules configured to execute the method in the first aspect or any possible implementation of the first aspect or the second aspect or any possible implementation of the second aspect.

In a sixth aspect, a device for wireless communication is provided, which is configured to execute the method in the third aspect or any possible implementation of the third aspect or the fourth aspect or any possible implementation of the fourth aspect. Specifically, the device for wireless communication includes functional modules configured to execute the method in the third aspect or any possible implementation of the third aspect or the fourth aspect or any possible implementation of the fourth aspect.

In a seventh aspect, a device for wireless communication is provided, which includes a processor, a memory and a transceiver. The processor, the memory and the transceiver communicate with one another through an internal connection path to transmit control and/or data signals, to enable the device for wireless communication to execute the method in the first aspect or any possible implementation of the first aspect or the second aspect or any possible implementation of the second aspect.

In an eighth aspect, a device for wireless communication is provided, which includes a processor, a memory and a transceiver. The processor, the memory and the transceiver communicate with one another through an internal connection path to transmit control and/or data signals, to enable the device for wireless communication to execute the method in the third aspect or any possible implementation of the third aspect or the fourth aspect or any possible implementation of the fourth aspect.

In a ninth aspect, a computer-readable medium is provided, which is configured to store a computer program. The computer program includes an instruction configured to execute any method or any possible implementation described above.

In a tenth aspect, a computer program product including an instruction is provided, which, when being run on a computer, enables the computer to execute any method or any possible implementation described above.

### BRIEF DESCRIPTION OF DRAWINGS

In order to describe the technical solutions of the embodiments of the present disclosure more clearly, the drawings required in description about the embodiments or a conventional art are simply introduced below. It is apparent that the drawings described below only illustrate some embodiments of the present disclosure. Other drawings may further be obtained by those of ordinary skill in the art according to these drawings without creative work.
FIG. 1 is a schematic diagram of a system for wireless communication according to an embodiment of the present disclosure.
FIG. 2 is a schematic flowchart of a method for wireless communication according to an embodiment of the present disclosure.
FIG. 3 is a schematic flowchart of a method for wireless communication according to an embodiment of the present disclosure.
FIG. 4 is a schematic block diagram of a device for wireless communication according to an embodiment of the present disclosure.
FIG. 5 is a schematic block diagram of a device for wireless communication according to an embodiment of the present disclosure.
FIG. 6 is a schematic block diagram of a system chip according to an embodiment of the present disclosure.
FIG. 7 is a schematic block diagram of a communication device according to an embodiment of the present disclosure.

### DETAILED DESCRIPTION

The technical solutions in the embodiments of the present disclosure will be described below in combination with the drawings in the embodiments of the present disclosure. It is apparent that the described embodiments are a part rather than all embodiments of the present disclosure. All other embodiments obtained by those of ordinary skill in the art based on the embodiments in the present disclosure without creative work shall fall within the scope of protection of the present disclosure.

The technical solutions of the embodiments of the present disclosure may be applied to various communication systems, for example, a Global System of Mobile Communication (GSM), a Code Division Multiple Access (CDMA) system, a Wideband Code Division Multiple Access (WCDMA) system, a General Packet Radio Service (GPRS), an LTE system, an LTE Frequency Division Duplex (FDD) system, LTE Time Division Duplex (TDD), a Universal Mobile Telecommunication System (UMTS), a Worldwide Interoperability for Microwave Access (WiMAX) communication system or a future 5G system.

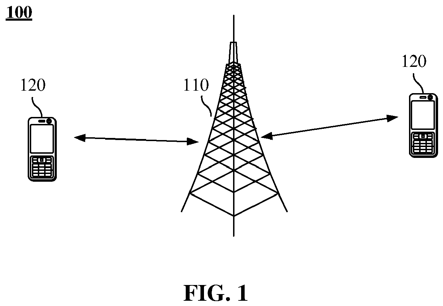

FIG. 1 illustrates a system 100 for wireless communication to which the embodiments of the present disclosure are applied. The system 100 for wireless communication may include a network device 110. The network device 110 may be a device communicating with a terminal device. The network device 110 may provide communication coverage for a specific geographical region and may communicate with a terminal device (for example, User Equipment (UE)) in the coverage. Optionally, the network device 100 may be a Base Transceiver Station (BTS) in the GSM or the CDMA system, may also be a NodeB (NB) in the WCDMA system, and may further be an Evolutional Node B (eNB or eNodeB) in the LTE system or a wireless controller in a Cloud Radio Access Network (CRAN). Alternatively, the network device may be a relay station, an access point, a vehicle-mounted device, a wearable device, a network-side device in a future 5G network, a network device in a future evolutional Public Land Mobile Network (PLMN) or the like.

The system 100 for wireless communication further includes at least one terminal device 120 within the coverage of the network device 110. The terminal device 120 may be mobile or fixed. Optionally, the terminal device 120 may refer to an access terminal, UE, a user unit, a user station, a mobile station, a mobile radio station, a remote station, a remote terminal, a mobile device, a user terminal, a terminal, a device for wireless communication, a user agent or a user device. The access terminal may be a cell phone, a cordless phone, a Session Initiation Protocol (SIP) phone, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in the future 5G network, a terminal device in the future evolutional PLMN or the like.

Optionally, the terminal device 120 may perform Device to Device (D2D) communication.

Optionally, the 5G system or network may also be called a New Radio (NR) system or network.

A network device and two terminal devices are exemplarily shown in FIG. 1. Optionally, the system 100 for wireless communication may include multiple network devices, and other number of terminal devices may be included in coverage of each network device, which is not limited in the embodiments of the present disclosure.

Optionally, the system 100 for wireless communication may further include another network entity such as a network controller and a mobility management entity, which is not limited in the embodiments of the present disclosure.

It is to be understood that terms "system" and "network" in the disclosure may usually be exchanged in the disclosure. In the disclosure, term "and/or" is only an association relationship describing associated objects and represents three relationships. For example, A and/or B may represent three conditions: i.e., only A, both A and B and only B. In addition, character "/" in the disclosure usually represents a "or" relationship between a previous object and a next objects which are associated.

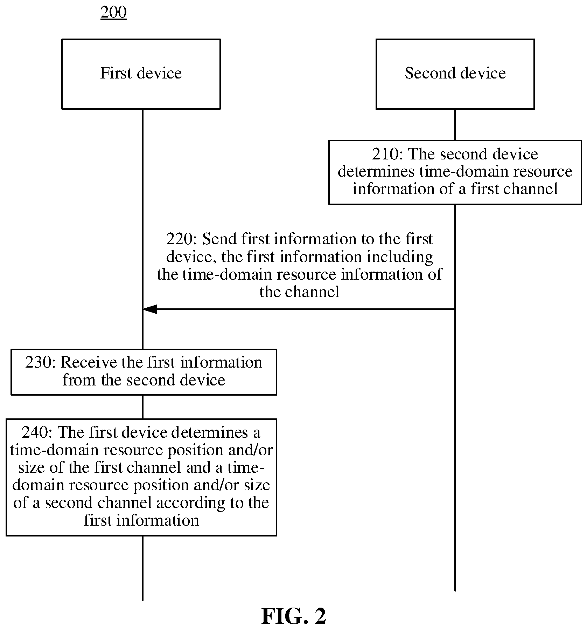

FIG. 2 is a schematic flowchart of a method 200 for wireless communication according to an embodiment of the present disclosure. The method 200 includes at least part content in the following contents.

In 210, a second device determines time-domain resource information of a first channel.

In 220, the second device sends first information to a first device. The first information includes the time-domain resource information of the first channel.

In 230, the first device receives the first information from the second device.

In 240, the first device determines a time-domain resource position and/or a time-domain resource size of the first channel and a time-domain resource position and/or a time-domain resource size of a second channel according to the first information.

Optionally, in the embodiment of the present disclosure, the first channel is a channel between the first device and the second device.

Optionally, in the embodiment of the present disclosure, the second channel is a channel between the first device and the second device.

Optionally, in the embodiment of the present disclosure, the first device may be a terminal device, the second device may be a network device, and the first channel and the second channel may be channels between the network device and the terminal device.

However, it is to be understood that the embodiment of the present disclosure is not limited thereto. For example, the first device may be a network device, the second device may be a network device, and the first channel and the second channel may be channels for communication between the second device as the network device and a terminal device. Alternatively, both the first device and the second device may be terminal devices, and the first channel and the second channel may be channels between the two terminal devices.

Optionally, the first channel and the second channel may be channels of the same type.

The channel may be classified according to uplink/downlink. For example, the first channel and the second channel are uplink channels, or the first channel and the second channel are downlink channels.

Alternatively, the channel is classified according to uplink/downlink in combination with the type of information transmitted through the channel. For example, the first channel and the second channel are PUSCHs, or the first channel and the second channel are PUCCHs, or the first channel and the second channel are PDSCHs.

Alternatively, the channel is classified according to the type of the information transmitted through the channel. For example, the first channel and the second channel are data channels, or the first channel and the second channel are control channels.

Optionally, the first channel and the second channel are different in at least one of being located in different bandwidth portions, being located on different carriers, being located in different cells, adopting different duplex directions or adopting different numerologies.

Descriptions will be described below with assuming that the first device is a terminal device and the second device is a network device.

Specifically, if the first channel and the second channel are located in different carriers, the terminal device may obtain, based on scheduling of the network device for the first channel transmitted by the terminal device on one carrier, the time-domain resource position and/or size of the second channel transmitted on the other carrier.

If the first channel and the second channel are located in different bandwidth portions, the terminal device may obtain, based on scheduling of the network device for the first channel transmitted by the terminal device on one bandwidth portion, the time-domain resource position and/or the time-domain resource size of the second channel transmitted on the other bandwidth portion.

If the first channel and the second channel are located in different cells, the terminal device may obtain, based on scheduling of the network device for the first channel transmitted by the terminal device on one cell, the time-domain resource position and/or the time-domain resource size of the second channel transmitted on the other cell.

If the first channel and the second channel adopt different duplex directions, the terminal device may obtain, based on scheduling of the network device for the first channel having one duplex direction of the terminal device, the time-domain resource position and/or the time-domain resource size of the second channel having the other duplex direction.

If the the first channel and the second channel adopt different numerologies, the terminal device may obtain, based on scheduling of the network device for the first channel having one numerology, the time-domain resource position and/or the time-domain resource size of the second channel having the other numerology.

Optionally, the first channel and the second channel adopting different numerologies includes subcarrier spacings and/or cyclic prefixes being different.

Optionally, in the embodiment of the present disclosure, the first device determines the time-domain resource position and/or the time-domain resource size of the first channel according to the first information, and the first device determines the time-domain resource position and/or the time-domain resource size of the second channel according to the time-domain resource position and/or the time-domain resource size of the first channel.

The operation that the time-domain resource position of the second channel is obtained according to the time-domain resource position of the first channel will be described below.

Specifically, the first device may determine the time-domain resource position of the second channel according to the time-domain resource position of the first channel and a position relationship between the time-domain resource position of the first channel and the time-domain resource position of the second channel.

Optionally, the position relationship indicates that:
the time-domain resource position of the first channel is identical to the time-domain resource position of the second channel;
the time-domain resource position of the first channel is ahead of the time-domain resource position of the second channel; or,
the time-domain resource position of the first channel is behind the time-domain resource position of the second channel.

It is to be understood that the time-domain resource position mentioned in the embodiment of the present disclosure may include a time-domain resource starting position and/or a time-domain resource ending position.

For example, the time-domain resource position of the first channel being identical to the time-domain resource position of the second channel may include the following conditions: 1) the time-domain resource starting positions of the first channel and the second channel are identical to each other, but the time-domain resource ending positions of the first channel and the second channel are different because the time-domain resource sizes of the first channel and the second channel are different; 2) the time-domain resource ending positions of the first channel and the second channel are identical to each other, but the time-domain resource starting positions of the first channel and the second channel are different because the time-domain resource sizes of the first channel and the second channel are different; and 3) the time-domain resource starting positions of the first channel and the second channel are identical to each other, the time-domain resource ending positions of the first channel and the second channel are identical to each other, and the time-domain resource sizes of the first channel and the second channel are also identical to each other.

For example, the time-domain resource position of the first channel being ahead of the time-domain resource position of the second channel may include the following conditions: 1) the time-domain resource starting position of the first channel is ahead of the time-domain resource starting position of the second channel, and a relationship between the time-domain resource ending position of the first channel and the time-domain resource ending position of the second channel is not limited; 2) the time-domain resource ending position of the first channel is ahead of the time-domain resource ending position of the second channel, and a relationship between the time-domain resource starting position of the first channel and the time-domain resource starting position of the second channel is not limited; and 3) the time-domain resource starting position of the first channel is ahead of the time-domain resource starting position of the second channel, and the time-domain resource ending position of the first channel is ahead of the time-domain resource ending position of the second channel.

For example, the time-domain resource position of the first channel being behind the time-domain resource position of the second channel may represent the following conditions: 1) the time-domain resource starting position of the first channel is behind the time-domain resource starting position of the second channel, and the relationship between the time-domain resource ending position of the first channel and the time-domain resource ending position of the second channel is not limited; 2) the time-domain resource ending position of the first channel is behind the time-domain resource ending position of the second channel, and the relationship between the time-domain resource starting position of the first channel and the time-domain resource starting position of the second channel is not limited; and 3) the time-domain resource starting position of the first channel is behind the time-domain resource starting position of the second channel, and the time-domain resource ending position of the first channel is behind the time-domain resource ending position of the second channel.

Optionally, when the position relationship indicates that the time-domain resource position of the first channel is ahead or behind the time-domain resource position of the second channel, the number of time-domain resources of the first channel which are located ahead of or behind the time-domain resources of the second channel may be indicated. The number of the time-domain resources of the first channel which are located ahead of or behind the time-domain resources of the second channel may be may be related to a capability of the terminal and the like.

Optionally, the position relationship is preset in the first device.

Alternatively, the first device receives second information from the second device, and the second information is used to indicate the position relationship.

Optionally, the second information is carried in RRC signaling, control information, system information or a MAC CE.

Optionally, the first information may be used to indicate a relative time-domain position of the first channel relative to a third channel. Then, the first device may obtain the time-domain resource position of the first channel according to a time-domain position of the third channel and the relative time-domain resource position and obtain the time-domain resource position of the second channel according to the time-domain resource position of the first channel.

The third channel may be a control channel, for example, a PDCCH. The first channel may be a data channel, for example, a PDSCH. Then, the first device may determine the time-domain position of the data channel according to the time-domain position of the detected control channel.

Optionally, the first information may be carried in the control channel, and the time-domain position of the detected control channel may be a time-domain position of the detected first information. In such case, the first information may be carried in Downlink Control Information (DCI).

It is to be understood that the first information may also be carried in the system information, the RRC signaling or the MAC CE.

It is to be understood that the first information may also directly indicate an absolute resource position of the first channel, for example, a slot and a symbol where the first channel is located, besides a position relationship between the time-domain resource position of the first channel and the third channel.

It is to be understood that, the operation that the time-domain resource position of the first channel is obtained according to the first information and the time-domain resource position of the second channel is obtained according to the time-domain resource position of the first channel and the position relationship between the time-domain resource position of the first channel and the time-domain resource position of the second channel is introduced above, the embodiment of the present disclosure is not limited thereto. For example, the resource position of the second channel may be obtained according to the position relationship between the time-domain resource position of the first channel and the time-domain resource position of the second channel and the position relationship between the time-domain resource positions of the first channel and the third channel rather than the time-domain resource position of the first channel.

It is to be understood that the time-domain resource position mentioned in the embodiment of the present disclosure may be a relative position. For example, the time-domain resource position of the second channel may be a time-domain resource position of the second channel relative to the third channel.

The operation that the time-domain resource position of the second channel is obtained according to the time-domain resource position of the first channel is introduced above, however, the embodiment of the present disclosure is not limited thereto. For example, the time-domain resource size of the second channel may be obtained according to the time-domain resource size of the first channel.

In an implementation, the time-domain resource size of the second channel may be equal to the time-domain resource size of the first channel (for example, the first channel and the second channel occupy the same number of symbols).

In an implementation, the time-domain resource size of the second channel may be N times or 1/N times the time-domain resource size of the first channel, N is an integer greater than 1. A value of N may be related to bandwidths and/or numerologies occupied by the first channel and the second channel respectively and/or the capability of the terminal, etc.

Therefore, in the embodiments of the present disclosure, not only the time-domain resource position and/or the time-domain resource size of the first channel but also the time-domain resource position and/or the time-domain resource size of the second channel are determined based on the time-domain resource information of the first channel, thereby solving the problem of high signaling overhead caused by sending of the time-domain resource information of the first channel and time-domain resource information of the second channel to the second device by the first device, improving flexibility in resource configuration and usage, and associating transmission of the first channel with transmission of the second channel.

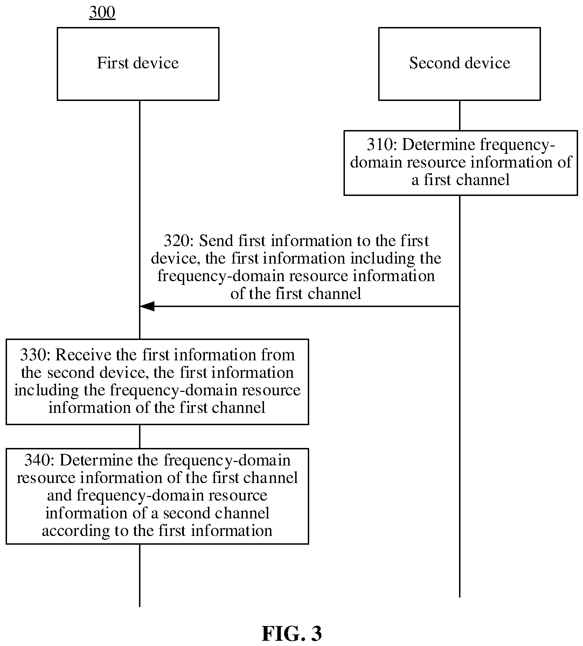

FIG. 3 is a schematic flowchart of a method 300 for wireless communication according to an embodiment of the present disclosure. The method 300 includes at least part of contents in the following contents.

In 310, a second device determines frequency-domain resource information of a first channel.

In 320, the second device sends first information to a first device. The first information includes the frequency-domain resource information of the first channel and is used by the first device to determine the frequency-domain resource information of the first channel and frequency-domain resource information of a second channel.

Optionally, the first information is carried in RRC signaling, system information, control information or a MAC CE.

In 330, the first device receives the first information from the second device. The first information includes the frequency-domain resource information of the first channel.

In 340, the first device determines the frequency-domain resource information of the first channel and the frequency-domain resource information of the second channel according to the first information.

Optionally, in the embodiment of the present disclosure, the first channel is a channel between the first device and the second device.

Optionally, in the embodiment of the present disclosure, the second channel is a channel between the first device and the second device.

Optionally, in the embodiment of the present disclosure, the first device may be a terminal device, the second device may be a network device, and the first channel and the second channel may be channels between the network device and the terminal device.

However, it is to be understood that the embodiment of the present disclosure is not limited thereto. For example, the first device may be a network device, the second device may be a network device, and the first channel and the second channel may be channels for communication between the second device as the network device and a terminal device. Alternatively, both the first device and the second device may be terminal devices, and the first channel and the second channel may be channels between the two terminal devices.

Optionally, the first channel and the second channel may be channels of the same type.

The channel may be classified according to uplink/downlink. For example, the first channel and the second channel are uplink channels, or the first channel and the second channel are downlink channels.

Alternatively, the channel is classified according to uplink/downlink in combination with a type of information transmitted through the channel. For example, the first channel and the second channel are PUSCHs, or the first channel and the second channel are PUCCHs, or the first channel and the second channel are PDSCHs.

Alternatively, the channel is classified according to the type of the information transmitted through the channel. For example, the first channel and the second channel are data channels, or the first channel and the second channel are control channels.

Optionally, the first channel and the second channel are different in at least one of being located in different bandwidth portions, being located on different carriers, being located in different cells, adopting different duplex directions or adopting different numerologies.

Descriptions will be described below with assuming that the first device is a terminal device and the second device is a network device.

Specifically, if the first channel and the second channel are located in different carriers, the terminal device may obtain, based on scheduling of the network device for the first channel transmitted by the terminal device on one carrier, the frequency-domain resource position and/or the frequency-domain resource size of the second channel transmitted on the other carrier.

If the first channel and the second channel are located in different bandwidth portions, the terminal device may obtain, based on scheduling of the network device for the first channel transmitted by the terminal device on one bandwidth portion, the frequency-domain resource position and/or the frequency-domain resource size of the second channel transmitted on the other bandwidth portion.

If the first channel and the second channel are located in different cells, the terminal device may obtain, based on scheduling of the network device for the first channel transmitted by the terminal device on one cell, the frequency-domain resource position and/or the frequency-domain resource size of the second channel transmitted on the other cell.

If the first channel and the second channel adopt different duplex directions, the terminal device may obtain, based on scheduling of the network device for the first channel having one duplex direction of the terminal device, the frequency-domain resource position and/or the frequency-domain resource size of the second channel having the other duplex direction.

If the first channel and the second channel adopt different numerologies, the terminal device may obtain, based on scheduling of the network device for the first channel having one numerology, the frequency-domain resource position and/or the frequency-domain resource size of the second channel having the other numerology.

Optionally, the first channel and the second channel adopting numerologies include subcarrier spacings and/or cyclic prefixes being different.

Optionally, the first information is used to indicate a frequency-domain resource position and/or a frequency-domain resource position size of the first channel. The first device determines the frequency-domain resource position and/or the frequency-domain resource position size of the first channel according to the first information, and the first device determines the frequency-domain resource position and/or the frequency-domain resource position size of the second channel according to the frequency-domain resource position and/or the frequency-domain resource position size of the first channel.

The operation that the frequency-domain resource position of the second channel is determined according to the frequency-domain resource position of the first channel will be described below.

The frequency-domain resource position of the second channel is determined according to the frequency-domain resource position of the first channel and a position relationship between the frequency-domain resource position of the first channel and the frequency-domain resource position of the second channel.

Optionally, the position relationship indicates that:
a relative frequency-domain position of the first channel in the carrier or the bandwidth portion where the first channel is located is identical to a relative frequency-domain position of the second channel in the carrier or the bandwidth portion where the second channel is located.

For example, subcarriers of the carrier or the bandwidth portion may be sequenced, and a subcarrier sequence number of the first channel in the carrier or the bandwidth portion where the first channel is located is equal to a subcarrier sequence number of the second channel in the carrier or the bandwidth portion where the second channel is located.

Of course, the relative frequency-domain position of the first channel in the carrier or the bandwidth portion where the first channel is located may also be different from the relative frequency-domain position of the second channel in the carrier or the bandwidth portion where the second channel is located.

For example, the subcarriers of the carrier or the bandwidth portion may be sequenced, and the subcarrier sequence number of the first channel in the carrier or the bandwidth portion where the first channel is located is unequal to the subcarrier sequence number of the second channel in the carrier or the bandwidth portion where the second channel is located. For example, a difference value between the sequence numbers is equal to a predetermined value.

Optionally, the position relationship is preset in the first device.

Optionally, the first device receives second information from the second device, the second information is used to indicate the position relationship.

Optionally, the second information is carried in RRC signaling, control information, system information or a MAC CE.

The operation that the frequency-domain resource size of the second channel is determined according to the frequency-domain resource size of the first channel will be described below.

The first device determines the frequency-domain resource size of the second channel according to the frequency-domain resource size of the first channel and a size relationship between the frequency-domain resource size of the first channel and the frequency-domain resource size of the second channel.

Optionally, the resource size mentioned in the embodiment of the present disclosure may be characterized by the number of subcarriers or the number of a Physical Resource Blocks (PRB) or a bandwidth.

Optionally, the frequency-domain resource size of the first channel is identical to the frequency-domain resource size of the second channel. For example, the first channel and the second channel have the same number of subcarrier or the same number of PRBs or the same bandwidth.

Optionally, the frequency-domain resource size of the first channel is N times or 1/N times the frequency-domain resource size of the second channel, N is an integer more than or equal to 1.

Optionally, the frequency-domain resource size of the first channel and the frequency-domain resource size of the second channel may be related to a size relationship between the carriers or bandwidth portions where the first channel and the second channel are located or a capability of the terminal device.

Optionally, N may be configured for the first device by the second device.

Optionally, the size relationship is preset in the first device.

Optionally, the first device receives third information from the second device. The third information is used to indicate the size relationship.

Optionally, the third information is carried in the RRC signaling, the control information, the system information or the MAC CE.

Therefore, in the embodiment of the present disclosure, the frequency-domain resource information of the second channel is determined through the frequency-domain resource position, indicated by the first device, of the first channel, thereby solving the problem of high signaling overhead caused by sending of the frequency-domain resource information of the first channel and the frequency-domain resource information of the second channel to the second device by the first device, and associating transmission of the first channel with transmission of the second channel.

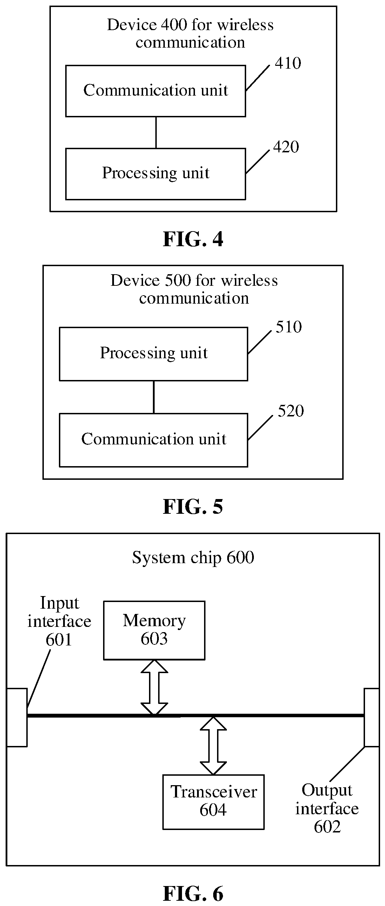

FIG. 4 is a schematic block diagram of a device 400 for wireless communication according to an embodiment of the present disclosure. As shown in FIG. 4, the device 400 for wireless communication includes a communication unit 410 and a processing unit 420.

The communication unit 410 is configured to receive first information from a second device. The first information includes time-domain resource information of a first channel.

The processing unit 420 is configured to determine a time-domain resource position and/or a time-domain resource size of the first channel and a time-domain resource position and/or a time-domain resource size of a second channel according to the first information.

It is to be understood that the device 400 for wireless communication may correspond to the first device in the method 200 which will not be elaborated herein for simplicity.

The communication unit 410 is configured to receive first information from a second device. The first information includes frequency-domain resource information of a first channel.

The processing unit 420 is configured to determine the frequency-domain resource information of the first channel and frequency-domain resource information of a second channel according to the first information.

It is to be understood that the device 400 for wireless communication may correspond to the first device in the method 300 and which will not be elaborated herein for simplicity.

FIG. 5 is a schematic block diagram of a device 500 for wireless communication according to an embodiment of the present disclosure. As shown in FIG. 5, the device 500 for wireless communication includes a processing unit 510 and a communication unit 520.

Optionally, the processing unit 510 is configured to determine time-domain resource information of a first channel.

The communication unit 520 is configured to send first information to a first device. The first information includes the time-domain resource information of the first channel and used by the first device to determine a time-domain resource position and/or a time-domain resource size of the first channel and a time-domain resource position and/or a time-domain resource size of a second channel.

It is to be understood that the device 500 for wireless communication may correspond to the second device in the method 200, which will not be elaborated herein for simplicity.

Optionally, the processing unit 510 is configured to determine frequency-domain resource information of a first channel.

The communication unit 520 is configured to send first information to a first device. The first information includes the frequency-domain resource information of the first channel and configured by the first device to determine the frequency-domain resource information of the first channel and frequency-domain resource information of a second channel.

It is to be understood that the device 500 for wireless communication may correspond to the second device in the method 300, which will not be elaborated herein for simplicity.

FIG. 6 is a schematic structure diagram of a system chip 600 according to an embodiment of the present disclosure. The system chip 600 of FIG. 6 includes an input interface 601, an output interface 602, a processor 603 and a memory 604. The processor 603 and the memory 604 may be connected through an internal communication connection line. The processor 603 is configured to execute a code in the memory 604.

Optionally, when the code is executed, the processor 603 implements the method executed by the first device in the method embodiment, which is not described repeatedly here anymore for simplicity.

Optionally, when the code is executed, the processor 603 implements the method executed by the second device in the method embodiment, which is not described repeatedly here anymore for simplicity.

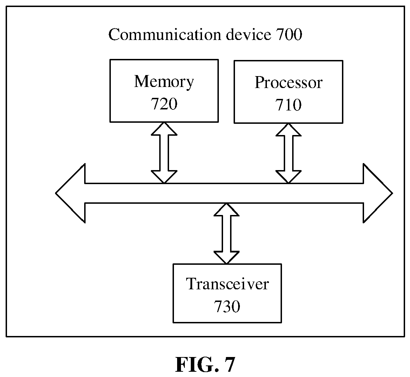

FIG. 7 is a schematic block diagram of a communication device 700 according to an embodiment of the present disclosure. As shown in FIG. 7, the communication device 700 includes a processor 710 and a memory 720. Herein, the memory 720 may store a program code, and the processor 710 may execute the program code stored in the memory 720.

Optionally, as shown in FIG. 7, the communication device 700 may include a transceiver 730, and the processor 710 may control the transceiver 730 for external communication.

Optionally, the processor 710 may call the program code stored in the memory 720 to execute corresponding operations of the first device in the method embodiment, which is not described repeatedly here anymore for simplicity.

Optionally, the processor 710 may call the program code stored in the memory 720 to execute corresponding operations of the second device in the method embodiment, which is not described repeatedly here anymore for simplicity.

It is to be understood that the processor in the embodiment of the present disclosure may be an integrated circuit chip and has a signal processing capability. In an implementation process, each step of the above method embodiment may be implemented by an integrated logical circuit of hardware in the processor or an instruction in a software form. The above processor may be a universal processor, a Digital Signal Processor (DSP), an Application Specific Integrated Circuit (ASIC), a Field Programmable Gate Array (FPGA) or another programmable logical device, a discrete gate or a transistor logical device and a discrete hardware component. Each method, step and logical block disclosed in the embodiments of the present disclosure may be implemented or executed. The universal processor may be a microprocessor or the processor may also be any conventional processor and the like. The steps of the method disclosed in combination with the embodiments of the present disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and implements the steps of the methods in combination with hardware.

It can be understood that the memory in the embodiment of the present disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but be not limited to, memories of these and any other proper types.

Those skilled in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by using different methods, however, such realization should be considered to fall within the scope of the disclosure.

Those skilled in the art may clearly learn about that regarding specific operation processes of the system, the device and the unit described above, reference may be made to the corresponding processes in the above method embodiment, which are not be elaborated herein for convenient and brief description.

In some embodiments provided by the disclosure, it should be understood that the disclosed system, device and method may be implemented in another manner. For example, the device embodiment described above is only schematic. For example, the units are divided according to logic functions, and may be divided in other division manners during practical implementation. For example, multiple units or components may be combined or integrated into another system, or some characteristics may be neglected or not executed. In addition, displayed or discussed coupling or direct coupling or communication connection may be indirect coupling or communication connection of the device or the units through some interfaces, and may be electrical and mechanical or in other forms.

The units described as separate parts may or may not be physically separated, and parts displayed as units may or may not be physical units. That is, the parts may be located in the same place, or may also be distributed to multiple network units. A part or all of the units may be selected to achieve the purpose of the solutions of the embodiments according to a practical requirement.

In addition, all functional units in each embodiment of the disclosure may be integrated into a processing unit, each unit may also physically exist independently, and two or more units may also be integrated into a unit.

When being implemented in form of software functional unit and sold or used as an independent product, the function may also be stored in a computer-readable storage medium. Based on such understanding, an essential part of the technical solutions of the disclosure or a part thereof making contributions to the conventional art or part of the technical solutions may be embodied in form of software product, and the computer software product is stored in a storage medium, including a plurality of instructions configured to enable a computer device (which may be a personal computer, a server, a network device or the like) to execute all or a part of the steps of the method in each embodiment of the disclosure. The above storage medium includes various media capable of storing program codes such as a U disk, a mobile hard disk, a read-only memory, a read access memory (RAM), a magnetic disk or an optical disk.

The forgoing is only the specific embodiments of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for wireless communication, comprising:
receiving, by a first device, first information from a second device, wherein the first information comprises time-domain resource information of a first channel; and
determining, by the first device, at least one of a time-domain resource position or a time-domain resource size of the first channel and at least one of a time-domain resource position or a time-domain resource size of a second channel according to the first information.

2. The method of claim 1, wherein the first channel and the second channel are different in at least one of:
being located in different bandwidth portions, being located on different carriers, being located in different cells, adopting different duplex directions or adopting different numerologies.

3. The method of claim 2, wherein the first channel and the second channel being different in adopting different numerologies comprises at least one of subcarrier spacing or a cyclic prefix being different.

4. The method of any one of claims 1 to 3, wherein determining, by the first device, at least one of the time-domain resource position or the time-domain resource size of the first channel and at least one of the time-domain resource position or the time-domain resource size of the second channel according to the first information comprises:
determining, by the first device, at least one of the time-domain resource position or the time-domain resource size of the first channel according to the first information; and
determining, by the first device, at least one of the time-domain resource position or the time-domain resource size of the second channel according to the at least one of the time-domain resource position or the time-domain resource size of the first channel.

5. The method of claim 4, wherein determining, by the first device, at least one of the time-domain resource position or the time-domain resource size of the second channel according to the at least one of time-domain resource position or the time-domain resource size of the first channel comprises:
determining the time-domain resource position of the second channel according to the time-domain resource position of the first channel and a position relationship between the time-domain resource position of the first channel and the time-domain resource position of the second channel.

6. The method of claim 5, wherein the position relationship indicates that:
the time-domain resource position of the first channel is identical to the time-domain resource position of the second channel;
the time-domain resource position of the first channel is ahead of the time-domain resource position of the second channel; or,
the time-domain resource position of the first channel is behind the time-domain resource position of the second channel.

7. The method of claim 5 or 6, wherein the position relationship is preset in the first device.

8. The method of claim 5 or 6, further comprising:
receiving, by the first device, second information from the second device, wherein the second information is used to indicate the position relationship.

9. The method of claim 8, wherein the second information is carried in Radio Resource Control (RRC) signaling, control information, system information or a Media Access Control Control Element (MAC CE).

10. The method of any one of claims 4 to 9, wherein the first information is used to indicate a relative time-domain position of the first channel relative to a third channel; and
determining, by the first device, at least one of the time-domain resource position or the time-domain resource size of the first channel according to the first information comprises:
determining the time-domain resource position of the first channel according to a time-domain resource position of the third channel and the relative time-domain position.

11. The method of claim 10, wherein the third channel is a control channel.

12. The method of any one of claims 1 to 11, wherein the first information is carried in control information in a control channel, system information, Radio Resource Control (RRC) signaling or a Media Access Control Control Element (MAC CE).

13. The method of any one of claims 1 to 12, wherein the first channel is a data channel, and the second channel is a data channel.

14. The method of any one of claims 1 to 13, wherein the first device is a terminal device, and the second device is a network device.

15. The method of any one of claims 1 to 14, wherein the first channel is a channel between the first device and the second device, and the second channel is a channel between the first device and the second device.

16. The method of any one of claims 1 to 15, wherein the time-domain resource position comprises at least one of a time-domain resource starting position or a time-domain resource ending position.

17. A method for wireless communication, comprising:
determining, by a second device, time-domain resource information of a first channel; and
sending, by the second device, first information to a first device, wherein the first information comprises the time-domain resource information of the first channel and is used by the first device to determine at least one of a time-domain resource position or a time-domain resource size of the first channel and at least one of a time-domain resource position or a time-domain resource size of a second channel.

18. The method of claim 17, wherein the first channel and the second channel are different in at least one of:
being located in different bandwidth portions, being located on different carriers, being located in different cells, adopting different duplex directions or adopting different numerologies.

19. The method of claim 18, wherein the first channel and the second channel being different in adopting different numerologies comprises that at least one of a subcarrier spacing or cyclic prefix being different.

20. The method of any one of claims 17 to 19, further comprising:
sending, by the second device, second information to the first device, wherein the second information is used to indicate a position relationship between the time-domain resource position of the first channel and the time-domain resource position of the second channel.

21. The method of claim 20, wherein the position relationship indicates that:
the time-domain resource position of the first channel is identical to the time-domain resource position of the second channel;
the time-domain resource position of the first channel is ahead of the time-domain resource position of the second channel; or,
the time-domain resource position of the first channel is behind the time-domain resource position of the second channel.

22. The method of claim 20 or 21, wherein the second information is information carried in Radio Resource Control (RRC) signaling, control information, system information or a Media Access Control Control Element (MAC CE).

23. The method of any one of claims 17 to 22, wherein the first information is used to indicate a relative time-domain position of the first channel relative to a third channel.

24. The method of claim 23, wherein the third channel is a control channel.

25. The method of any one of claims 17 to 24, wherein the first information is carried in control information in a control channel, system information, Radio Resource Control (RRC) signaling or a Media Access Control Control Element (MAC CE).

26. The method of any one of claims 17 to 25, wherein the first channel is a data channel, and the second channel is a data channel.

27. The method of any one of claims 17 to 26, wherein the first device is a terminal device, and the second device is a network device.

28. The method of any one of claims 17 to 27, wherein the first channel is a channel between the first device and the second device, and the second channel is a channel between the first device and the second device.

29. The method of any one of claims 17 to 28, wherein the time-domain resource position comprises at least one of a time-domain resource starting position or a time-domain resource ending position.

30. A method for wireless communication, comprising:
receiving, by a first device, first information from a second device, the first information comprising frequency-domain resource information of a first channel; and
determining, by the first device, the frequency-domain resource information of the first channel and frequency-domain resource information of a second channel according to the first information.

31. The method of claim 30, wherein the first channel and the second channel are different in at least one of:
being located in different bandwidth portions, being located on different carriers, being located in different cells, adopting different duplex directions or adopting different numerologies.

32. The method of claim 31, wherein the first channel and the second channel being different in adopting different numerologies comprises at least one of subcarrier spacing or a cyclic prefix being different.

33. The method of any one of claims 30 to 32, wherein the first information is used to indicate at least one of a frequency-domain resource position or a frequency-domain resource size of the first channel, and
determining, by the first device, the frequency-domain resource information of the first channel and the frequency-domain resource information of the second channel according to the first information comprises:
determining, by the first device, at least one of the frequency-domain resource position or the frequency-domain resource size of the first channel according to the first information; and
determining, by the first device, at least one of a frequency-domain resource position or a frequency-domain resource size of the second channel according to the at least one of the frequency-domain resource position or the frequency-domain resource size of the first channel.

34. The method of claim 33, wherein determining, by the first device, at least one of the frequency-domain resource position or the frequency-domain resource size of the second channel according to the at least one of the frequency-domain resource position or the frequency-domain resource size of the first channel comprises:
determining the frequency-domain resource position of the second channel according to the frequency-domain resource position of the first channel and a position relationship between the frequency-domain resource position of the first channel and the frequency-domain resource position of the second channel.

35. The method of claim 34, wherein the position relationship indicates that:
a relative frequency-domain position of the first channel in a carrier or bandwidth portion where the first channel is located is identical to a relative frequency-domain position of the second channel in a carrier or bandwidth portion where the second channel is located.

36. The method of claim 34 or 35, wherein the position relationship is preset in the first device.

37. The method of claim 34 or 35, further comprising:
receiving, by the first device, second information from the second device, the second information being used to indicate the position relationship.

38. The method of claim 37, wherein the second information is carried in Radio Resource Control (RRC) signaling, control information, system information or a Media Access Control Control Element (MAC CE).

39. The method of any one of claims 33 to 38, wherein determining, by the first device, at least one of the frequency-domain resource position or the frequency-domain resource size of the second channel according to the at least one of the frequency-domain resource position or the frequency-domain resource size of the first channel comprises:
determining the frequency-domain resource size of the second channel according to the frequency-domain resource size of the first channel and a size relationship between the frequency-domain resource size of the first channel and the frequency-domain resource size of the second channel.

40. The method of claim 39, wherein the size relationship indicates that:
the frequency-domain resource size of the first channel is identical to the frequency-domain resource size of the second channel; or
the frequency-domain resource size of the first channel is N times or 1/N times the frequency-domain resource size of the second channel, N being an integer greater than 1.

41. The method of claim 39 or 40, wherein the size relationship is preset in the first device.

42. The method of claim 39 or 40, further comprising:
receiving, by the first device, third information from the second device, wherein the third information is used to indicate the size relationship.

43. The method of claim 42, wherein the third information is carried in Radio Resource Control (RRC) signaling, control information, system information or a Media Access Control Control Element (MAC CE).

44. The method of any one of claims 30 to 43, wherein the first information is carried in Radio Resource Control (RRC) signaling, system information, control information or a Media Access Control Control Element (MAC CE).

45. The method of any one of claims 30 to 44, wherein the first device is a terminal device, and the second device is a network device.

46. The method of any one of claims 30 to 45, wherein the first channel is a channel between the first device and the second device, and the second channel is a channel between the first device and the second device.

47. A method for wireless communication, comprising:
determining, by a second device, frequency-domain resource information of a first channel; and
sending, by the second device, first information to a first device, wherein the first information comprises the frequency-domain resource information of the first channel and is used by the first device to determine the frequency-domain resource information of the first channel and frequency-domain resource information of a second channel.

48. The method of claim 47, wherein the first channel and the second channel are different in at least one of:
being located in different bandwidth portions, being located on different carriers, being located in different cells, adopting different duplex directions or adopting different numerologies.

49. The method of claim 48, wherein the first channel and the second channel being different in adopting different numerologies comprises at least one of subcarrier spacing or a cyclic prefix being different.

50. The method according to any one of claims 47 to 49, further comprising:
sending, by the second device, second information to the first device, wherein the second information is used to indicate a position relationship between a frequency-domain resource position of the first channel and a frequency-domain resource position of the second channel.

51. The method of claim 50, wherein the position relationship indicates that:
a relative frequency-domain position of the first channel in a carrier or a bandwidth portion where the first channel is located is identical to a relative frequency-domain position of the second channel in a carrier or a bandwidth portion where the second channel is located.

52. The method of claim 50 or 51, wherein the second information is carried in Radio Resource Control (RRC) signaling, control information, system information or a Media Access Control Control Element (MAC CE).

53. The method according to any one of claims 47 to 49, further comprising:
sending, by the second device, third information to the first device, wherein the third information is used to indicate a size relationship between a frequency-domain resource size of the first channel and a frequency-domain resource size of the second channel.

54. The method of claim 53, wherein the size relationship indicates that:
the frequency-domain resource size of the first channel is identical to the frequency-domain resource size of the second channel; or
the frequency-domain resource size of the first channel is N times or 1/N times the frequency-domain resource size of the second channel, N being an integer greater than 1.

55. The method of claim 53 or 54, wherein the third information is information carried in Radio Resource Control (RRC) signaling, control information, system information or a Media Access Control Control Element (MAC CE).

56. The method of any one of claims 47 to 55, wherein the first information is carried in Radio Resource Control (RRC) signaling, system information, control information or a Media Access Control Control Element (MAC CE).

57. The method of any one of claims 47 to 56, wherein the first device is a terminal device, and the second device is a network device.

58. The method of any one of claims 47 to 57, wherein the first channel is a channel between the first device and the second device, and the second channel is a channel between the first device and the second device.

59. A device for wireless communication, wherein the device is a first device and comprises a communication unit and a processing unit, wherein
the communication unit is configured to receive first information from a second device, wherein the first information comprises time-domain resource information of a first channel; and
the processing unit is configured to determine at least one of a time-domain resource position or a time-domain resource size of the first channel and at least one of a time-domain resource position or a time-domain resource size of a second channel according to the first information.

60. The device of claim 59, wherein the first channel and the second channel are different in at least one of:
being located in different bandwidth portions, being located on different carriers, being located in different cells, adopting different duplex directions or adopting different numerologies.

61. The device of claim 60, wherein the first channel and the second channel being different in adopting different numerologies comprises at least one of subcarrier spacing or a cyclic prefix being different.

62. The device of any one of claims 59 to 61, wherein the processing unit is further configured to:
determine at least one of the time-domain resource position or the time-domain resource size of the first channel according to the first information; and
determine at least one of the time-domain resource position or the time-domain resource size of the second channel according to the at least one of the time-domain resource position or the time-domain resource size of the first channel.

63. The device of claim 62, wherein the processing unit is further configured to:
determine the time-domain resource position of the second channel according to the time-domain resource position of the first channel and a position relationship between the time-domain resource position of the first channel and the time-domain resource position of the second channel.

64. The device of claim 63, wherein the position relationship indicates that:
the time-domain resource position of the first channel is identical to the time-domain resource position of the second channel;
the time-domain resource position of the first channel is ahead of the time-domain resource position of the second channel; or,
the time-domain resource position of the first channel is behind the time-domain resource position of the second channel.

65. The device of claim 63 or 64, wherein the position relationship is preset in the first device.

66. The device of claim 63 or 64, wherein the communication unit is further configured to:
receive second information from the second device, wherein the second information is used to indicate the position relationship.

67. The device of claim 66, wherein the second information is carried in Radio Resource Control (RRC) signaling, control information, system information or a Media Access Control Control Element (MAC CE).

68. The device of any one of claims 62 to 67, wherein the first information is configured to indicate a relative time-domain position of the first channel relative to a third channel; and
the processing unit is further configured to:
determine the time-domain resource position of the first channel according to a time-domain resource position of the third channel and the relative time-domain position.

69. The device of claim 68, wherein the third channel is a control channel.

70. The device of any one of claims 59 to 69, wherein the first information is carried by control information in a control channel, system information, Radio Resource Control (RRC) signaling or a Media Access Control Control Element (MAC CE).

71. The device of any one of claims 59 to 70, wherein the first channel is a data channel, and the second channel is a data channel.

72. The device of any one of claims 59 to 71, wherein the first device is a terminal device, and the second device is a network device.

73. The device of any one of claims 59 to 72, wherein the first channel is a channel between the first device and the second device, and the second channel is a channel between the first device and the second device.

74. The device of any one of claims 59 to 73, wherein the time-domain resource position comprises at least one of a time-domain resource starting position or a time-domain resource ending position.

75. A device for wireless communication, wherein the device is a second device and comprises a processing unit and a communication unit, wherein
the processing unit is configured to determine time-domain resource information of a first channel; and
the communication unit is configured to send first information to a first device, wherein the first information comprises the time-domain resource information of the first channel and is used by the first device to determine at least one of a time-domain resource position or a time-domain resource size of the first channel and at least one of a time-domain resource position or a time-domain resource size of a second channel.

76. The device of claim 75, wherein the first channel and the second channel are different in at least one of:
being located in different bandwidth portions, being located on different carriers, being located in different cells, adopting different duplex directions or adopting different numerologies.

77. The device of claim 76, wherein the first channel and the second channel being different in adopting different numerologies comprises that at least one of a subcarrier spacing or cyclic prefix being different.

78. The device of any one of claims 75 to 77, wherein the communication unit is configured to:
send second information to the first device, wherein the second information is used to indicate a position relationship between the time-domain resource position of the first channel and the time-domain resource position of the second channel.

79. The device of claim 78, wherein the position relationship indicates that:
the time-domain resource position of the first channel is identical to the time-domain resource position of the second channel;
the time-domain resource position of the first channel is ahead of the time-domain resource position of the second channel; or,
the time-domain resource position of the first channel is behind the time-domain resource position of the second channel.

80. The device of claim 78 or 79, wherein the second information is information carried in Radio Resource Control (RRC) signaling, control information, system information or a Media Access Control Control Element (MAC CE).

81. The device of any one of claims 75 to 80, wherein the first information is used to indicate a relative time-domain position of the first channel relative to a third channel.

82. The device of claim 81, wherein the third channel is a control channel.

83. The device of any one of claims 75 to 82, wherein the first information is carried by control information in a control channel, system information, Radio Resource Control (RRC) signaling or a Media Access Control Control Element (MAC CE).

84. The device of any one of claims 75 to 83, wherein the first channel is a data channel, and the second channel is a data channel.

85. The device of any one of claims 75 to 84, wherein the first device is a terminal device, and the second device is a network device.

86. The device of any one of claims 75 to 85, wherein the first channel is a channel between the first device and the second device, and the second channel is a channel between the first device and the second device.

87. The device of any one of claims 75 to 86, wherein the time-domain resource position comprises at least one of a time-domain resource starting position or a time-domain resource ending position.

88. A device for wireless communication, wherein the device is a first device and comprises a communication unit and a processing unit, wherein
the communication unit is configured to receive first information from a second device, wherein the first information comprises frequency-domain resource information of a first channel; and
the processing unit is configured to determine the frequency-domain resource information of the first channel and frequency-domain resource information of a second channel according to the first information.

89. The device of claim 88, wherein the first channel and the second channel are different in at least one of:
being located in different bandwidth portions, being located on different carriers, being located in different cells, adopting different duplex directions or adopting different numerologies.

90. The device of claim 89, wherein the first channel and the second channel being different in adopting different numerologies comprises at least one of subcarrier spacing or a cyclic prefix being different.

91. The device of any one of claims 88 to 90, wherein the first information is used to indicate at least one of a frequency-domain resource position or a frequency-domain resource size of the first channel; and
the processing unit is further configured to:
determine at least one of the frequency-domain resource position or the frequency-domain resource size of the first channel according to the first information and
determine at least one of a frequency-domain resource position or a frequency-domain resource size of the second channel according to at least one of the frequency-domain resource position or the frequency-domain resource size of the first channel.

92. The device of claim 91, wherein the processing unit is further configured to:
determine the frequency-domain resource position of the second channel according to the frequency-domain resource position of the first channel and a position relationship between the frequency-domain resource position of the first channel and the frequency-domain resource position of the second channel.

93. The device of claim 92, wherein the position relationship indicates that:
a relative frequency-domain position of the first channel in a carrier or bandwidth portion where the first channel is located is identical to a relative frequency-domain position of the second channel in a carrier or bandwidth portion where the second channel is located.

94. The device of claim 92 or 93, wherein the position relationship is preset in the first device.

95. The device of claim 92 or 93, wherein the communication unit is further configured to:
receive second information from the second device, wherein the second information is used to indicate the position relationship.

96. The device of claim 95, wherein the second information is carried in Radio Resource Control (RRC) signaling, control information, system information or a Media Access Control Control Element (MAC CE).

97. The device of any one of claims 91 to 96, wherein the communication unit is further configured to:
determine the frequency-domain resource size of the second channel according to the frequency-domain resource size of the first channel and a size relationship between the frequency-domain resource size of the first channel and the frequency-domain resource size of the second channel.

98. The device of claim 97, wherein the size relationship indicates that:
the frequency-domain resource size of the first channel is identical to the frequency-domain resource size of the second channel; or
the frequency-domain resource size of the first channel is N times or 1/N times the frequency-domain resource size of the second channel, N being an integer greater than 1.

99. The device of claim 97 or 98, wherein the size relationship is preset in the first device.

100. The device of claim 97 or 98, wherein the communication unit is further configured to:
receive third information from the second device, wherein the third information is used to indicate the size relationship.

101. The device of claim 100, wherein the third information is carried in Radio Resource Control (RRC) signaling, control information, system information or a Media Access Control Control Element (MAC CE).

102. The device of any one of claims 88 to 101, wherein the first information is carried in Radio Resource Control (RRC) signaling, system information, control information or a Media Access Control Control Element (MAC CE).

103. The device of any one of claims 88 to 102, wherein the first device is a terminal device, and the second device is a network device.

104. The device of any one of claims 88 to 103, wherein the first channel is a channel between the first device and the second device, and the second channel is a channel between the first device and the second device.

105. A device for wireless communication, wherein the device is a second device and comprises a processing unit and a communication unit, wherein
the processing unit is configured to determine frequency-domain resource information of a first channel; and
the communication unit is configured to send first information to a first device, wherein the first information comprises the frequency-domain resource information of the first channel and is used by the first device to determine the frequency-domain resource information of the first channel and frequency-domain resource information of a second channel.

106. The device of claim 105, wherein the first channel and the second channel are different in at least one of:
being located in different bandwidth portions, being located on different carriers, being located in different cells, adopting different duplex directions or adopting different numerologies.

107. The device of claim 106, wherein the first channel and the second channel being different in adopting different numerologies comprises at least one of subcarrier spacing or a cyclic prefix being different.

108. The device of any one of claims 105 to 107, wherein the communication unit is further configured to:
send second information to the first device, wherein the second information is used to indicate a position relationship between a frequency-domain resource position of the first channel and a frequency-domain resource position of the second channel.

109. The device of claim 108, wherein the position relationship indicates that:
a relative frequency-domain position of the first channel in a carrier or a bandwidth portion where the first channel is located is identical to a relative frequency-domain position of the second channel in a carrier or a bandwidth portion where the second channel is located.

110. The device of claim 108 or 109, wherein the second information is carried in Radio Resource Control (RRC) signaling, control information, system information or a Media Access Control Control Element (MAC CE).

111. The device of any one of claims 105 to 107, wherein the communication unit is further configured to:
send third information to the first device, wherein the third information is used to indicate a size relationship between a frequency-domain resource size of the first channel and a frequency-domain resource size of the second channel.

112. The device of claim 111, wherein the size relationship indicates that:
the frequency-domain resource size of the first channel is identical to the frequency-domain resource size of the second channel; or
the frequency-domain resource size of the first channel is N times or 1/N times the frequency-domain resource size of the second channel, N being an integer greater than 1.

113. The device of claim 111 or 112, wherein the third information is information carried in the Radio Resource Control (RRC) signaling, control information, system information or a Media Access Control Control Element (MAC CE).

114. The device of any one of claims 105 to 113, wherein the first information is carried in Radio Resource Control (RRC) signaling, system information, control information or a Media Access Control Control Element (MAC CE).

115. The device of any one of claims 105 to 114, wherein the first device is a terminal device, and the second device is a network device.

116. The device of any one of claims 105 to 115, wherein the first channel is a channel between the first device and the second device, and the second channel is a channel between the first device and the second device.
